Europäisches Patentamt

European Patent Office

Office européen des brevets

(19)

(11) Veröffentlichungsnummer: **0 220 433**
B1

(12) EUROPÄISCHE PATENTSCHRIFT

(45) Veröffentlichungstag der Patentschrift:
28.02.90

(51) Int. Cl.⁴: **C08J 3/22**, C08L 23/12,
C08J 5/18, B29D 7/01

(21) Anmeldenummer: 86112324.8

(22) Anmeldetag: 05.09.86

(54) Verfahren zur Herstellung einer biaxial orientierten Polypropylenfolie.

(30) Priorität: 14.09.85  DE 3532884

(43) Veröffentlichungstag der Anmeldung:
06.05.87 Patentblatt 87/19

(45) Bekanntmachung des Hinweises auf die Patenterteilung:
28.02.90 Patentblatt 90/9

(84) Benannte Vertragsstaaten:
BE DE FR GB IT NL

(56) Entgegenhaltungen:
EP-A- 0 004 633
DE-A- 3 002 753
DE-A- 3 002 753
DE-A- 3 241 395
FR-A- 2 276 349

CHEMICAL ABSTRACTS, Band 82, Nr. 12, 24. März 1975,
Seite 37, Zusammenfassung Nr. 73958w, Columbus,
Ohio, US; & JP-B-74 24 136

(73) Patentinhaber: HOECHST AKTIENGESELLSCHAFT,
Postfach 80 03 20, D-6230 Frankfurt am Main 80(DE)

(72) Erfinder: Crass, Günther, Bachstrasse 7,
D-6204 Taunusstein 4(DE)
Erfinder: Schlögl, Gunter, Dr., Finkenweg 2,
D-6233 Kelkheim(DE)
Erfinder: Bothe, Lothar, Dr., Am Heiligenhaus 9,
D-6500 Mainz-Gonsenheim(DE)
Erfinder: Peiffer, Herbert, Dr., Katzenberg 78,
D-6500 Mainz-Finthenelm(DE)

## Beschreibung

Die vorliegende Erfindung betrifft ein Verfahren zur Herstellung einer biaxial streckorientierten Folie mit wenigstens einer opaken Schicht, bestehend im wesentlichen aus Polypropylen und Füllstoffen in einer Menge von 10 bis 40 Gew.-%, bezogen auf das Gesamtgewicht von Polypropylen und Füllstoffen, bei dem Granulat in einem Schneckenextruder aufgeschmolzen, durch eine Düse gepreßt und durch Abkühlen zu einer Vorfolie ausgeformt wird, welche dann sowohl in Maschinenrichtung längs als auch senkrecht zur Maschinenrichtung quer streckorientiert und anschließend thermofixiert wird (EP-A 0 206 040).

Folien umfassend eine Schicht mit einem Gehalt an Füllstoffen von nichtverträglichen oder nur schwer verträglichen organischen oder anorganischen pulverförmigen Materialien sind beispielsweise aus der deutschen Auslegeschrift 2 814 311 und der EP-A 4 633, oder aus der DE-A 3 436 961 bekannt. Die in diesen Druckschriften beschriebenen Folien erhalten durch die Zugabe des oben benannten Füllstoffes ein opakes Aussehen, zeigen einen hohen Oberflächenglanz, sind heiß- oder kaltsiegelbar und lassen sich schließlich sehr gut bedrucken. Die Opazität dieser Folien entsteht beim Strecken der koextrudierten Folie, wobei die Polymermatrix an den Korngrenzen des mit dem Polypropylen unverträglichen Füllstoffes aufgerissen wird. Hierdurch entstehen über das ganze Folieninnere Vakuolen oder Mikrohohlräume, an denen sich das Licht anders bricht als an der Polymermatrix. Infolge der Brechung oder Streuung des Lichtes im Bereich dieser Hohlräume besitzt die Folie ein opakes sehr werbewirksames und daher wünschenswertes Aussehen. Die Folien nach dem Stand der Technik werden durch bekannte Verfahren hergestellt. Grundoperationen des Herstellungsverfahrens bilden die Verfahrensschritte Extrusion (Aufschmelzen) der Rohstoffe für die Basis- und die Deckschichten, Umformen der Schmelzestränge zu einem ebenen Schmelzefilm und Abkühlen dieses Schmelzefilmes zu einer Vorfolie. Hierbei ist die Dichte der Vorfolie gleich der rechnerischen Dichte aus Polymerwerkstoff und Füllstoff. Daran anschließend wird die Folie biaxial in Folge entweder zuerst in Längsrichtung und dann in Querrichtung oder zuerst in Querrichtung und dann in Längsrichtung in bekannter Weise verstreckt (vgl. deutsche Auslegeschrift 28 14 311). Auch die Zwischenschritte, z.B. Abkühlen der Folie zur Verfestigung und Wiederaufheizen der Folie auf Strecktemperatur und der der letzten Streckung nachfolgende Schritt, die Thermofixierung, werden in bekannter Weise durchgeführt.

Nach dem bisher angewandten Verfahren wird das Polymer für die mit Füllstoffen versehene Schicht bei der Rohstoffherstellung mit den gewünschten Gewichtsmengen an organischen oder anorganischen Füllstoffen ausgerüstet. Dies geschieht beim Granulieren des Polypropylen-Pulvers beispielsweise in Zweischneckenextrudern, wo dem Rohstoff auch andere Additive wie Antioxidantien, Antistatika und/oder Stabilisatoren in der jeweiligen optimalen Menge zugegeben werden.

Für den Einsatzzweck der Folienherstellung wurde ursprünglich zylinderförmiges Granulat mit einem Durchmesser von 3 bis 4mm und einer Länge von 4mm, wie es auch für andere Anwendungen üblich ist, eingesetzt. Die Verarbeitung dieses Granulates mit einem Füllstoffanteil von mehr als 10 Gew.-% des unverträglichen Materials zusammen mit dem herstellungsprozeßbedingten Anteil an aus während der Folienherstellung anfallendem Regenerat hergestelltem Regranulat in den betriebsüblichen Einschneckenextrudern gelang zwar zunächst recht gut, bei Steigerung der Extrusionsgeschwindigkeit, d.h. Erhöhung des Extruderausstosses, zeigten sich jedoch feine Bläschen in der Endfolie, die das Produkt unbrauchbar machten. Die Bläschen konnten als Luftbläschen identifiziert werden.

Die Beseitigung dieser äußerst unerwünschten Bläschen für den bis zu 10 Gew.-% gefüllten Rohstoff gelang überraschenderweise durch Umstellung von zylinderförmigem auf linsenförmiges Granulat, wobei das linsenförmige Granulat einen Durchmesser von ca. 5 bis 6mm und eine Dicke von ca. 2 bis 3mm aufwies. Es stellte sich jedoch heraus, daß auch diese Verarbeitungsweise störanfällig ist, da von Zeit zu Zeit in unregelmäßigen Abständen die Bläschenbildung immer wieder beobachtet wurde.

Die Verbesserung der Verarbeitbarkeit durch die Wahl von linsenförmigem Granulat anstelle des sonst üblichen zylinderförmigen Materials kann in der Erhöhung der Schüttgutdichte von durchschnittlich 530 kg/m³ auf 570 kg/m³ bei einem üblichen Regeneratanteil von 30 bis 40% gesehen werden, aber auch in der Vergrößerung der spezifischen Oberfläche der Schüttung. Durch die größere Oberfläche gelangt beim Erwärmen des Materials im Extruder die im Korn befindliche Luft schneller in die Kornzwischenräume, von wo sie zum Trichter hin abgequetscht werden kann. Durch die höhere Schüttgutdichte ist natürlich von Anfang an weniger Luft in dem System als bei kleinerer Schüttgutdichte.

Es ist zwar prinzipiell möglich, daß ein Entfernen von in dem Schneckenraum enthaltener Luft - zumindest teilweise - über sogenannte Entgasungszonen, Vakuumtrichter oder Zweischneckenextruder mit Entgasungsmöglichkeit vorgenommen werden kann, diese vorrichtungsmäßigen Abwandlungen verteuern allerdings zunächst einmal die vorhandene Ausrüstung und führen auf der anderen Seite nicht in jedem Fall garantiert zu dem angestrebten Erfolg. Zudem ist es üblich und in produktionstechnischer Hinsicht vielfach vorteilhaft, die Extrusion von Polypropylenfolien auf Einschneckenextrudern, bevorzugt auf förderwirksam genuteten Einschneckenextrudern durchzuführen.

Eine Verarbeitung von Rohstoff mit einem Anteil größer als 10 Gew.-% an unverträglichen oder nur schwer verträglichen organischen oder anorganischen Füllstoffen zu blasenfreien Folien mit Hilfe von linsenförmigem Granulat gelang dagegen nicht in befriedigender Weise, d.h. mit für den Produktionsprozeß wünschenswerten Durchsatzmengen pro Zeiteinheit. Vorwiegend bei Folien größerer Dicke (Dicke größer als 50 µm) zeigte die Oberfläche der Folien eine mehr oder minder regellose Blasenstruktur, die auch durch Optimierung der Extrusionsbedingungen (kältere oder wärmere Einzugszone, Vorwärmung, d.h. Temperierung mit partieller Entgasung des Granulat- und Regeneratgemisches) nicht vollständig beseitigt werden konnte. Bisher konnte mit den verschiedenen nach dem Stand der Technik angewandten Verfahren noch keine spezifikationsgerechte Folie enthaltend einen Füllstoffanteil höher als 10 Gew.-% der genannten Füllstoffe hergestellt werden.

Der vorliegenden Erfindung lag daher die Aufgabe zugrunde, ein Verfahren zu schaffen, mit dem es möglich ist, auf wirtschaftliche Art und Weise, d.h. mit hoher Produktionsgeschwindigkeit, in vollem Umfang blasenfreie opake Folien herzustellen, die eine Füllstoffmenge bis zu 40 Gew.-%, bezogen auf das Gesamtgewicht aus Polymeren und Füllstoffen, aufweisen, und mit diesem Verfahren Folien mit besonders niedriger Dichte herzustellen.

Gelöst wird diese Aufgabe durch ein Verfahren der eingangs genannten Gattung, dessen kennzeichnende Merkmale darin zu sehen sind, daß die Zugabe der Füllstoffe zu Granulat aus keine Füllstoffe enthaltenden Polymeren in Form eines Masterbatches vorgenommen wird und daß das Masterbatch einen Füllstoffanteil von mehr als 30 Gew.-%, bezogen auf das Gesamtgewicht des Masterbatches, aufweist. Die abhängigen Ansprüche geben zweckmäßige Weiterbildungen des Verfahrens an.

Unter dem Begriff Masterbatch ist im Rahmen der vorliegenden Erfindung eine Stammischung zu verstehen, insbesondere ein granulatförmiges staubfreies Konzentrat eines Kunststoffrohstoffes mit hohen Mengen an Füllstoffen, das in der Masseaufbereitung als Zwischenprodukt verwendet wird, so als Zusatz zu keine Füllstoffe enthaltendem Granulat vor dem Extrudieren, um daraus bestimmte Mengen an Füllstoff enthaltenden Formkörpern herzustellen. Das erfindungsgemäß eingesetzte Masterbatch zeichnet sich dadurch aus, daß es bevorzugt mehr als 40 Gew.-%, bezogen auf das Gesamtgewicht aus Polymeren plus Füllstoffen, an Füllstoffen enthält. Es liegt besonders vorteilhaft als zylinder- oder linsenförmiges Granulat vor.

Bei den Füllstoffen handelt es sich um die üblichen anorganischen oder organischen, mit Polypropylen unverträglichen, pulverförmigen Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Die mittlere Teilchengröße des pulverförmigen Füllstoffes liegt im Bereich von 2 bis 5 µm, vorzugsweise im Bereich von 3 bis 4 µm. Das Masterbatch kann auch zusätzlich zweckmäßige Additive wie Antioxidantien, Antistatika, Farbstoffe und/oder Stabilisatoren in einer jeweils wirksamen Menge enthalten.

Wenn das Masterbatch als zylinderförmiges Granulat vorliegt, liegen die mittleren Durchmesser der Zylinder bevorzugt im Bereich von 1 bis 2 mm und die mittlere Länge der Zylinder im Bereich von 0,5 bis 1,5 mm. Wenn das Masterbatch als linsenförmiges Granulat vorliegt, sollen die Linsen einen mittleren Durchmesser im Bereich von 1 bis 3 mm und eine mittlere Dicke im Bereich von 0,5 bis 1 mm aufweisen.

Als bevorzugtes Polymeres wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140°C, bevorzugt von 150°C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für die bevorzugten Polymeren dar.

Die bevorzugten Polymeren haben zweckmäßigerweise einen Schmelzflußindex im Bereich von 0,5g/10 min bis 8 g/10 min bei 230°C und 2,16 kp Belastung (DIN 53 735), insbesondere von 1,5g/10 min bis 4g/10 min.

Das Masterbatch wird nach dem erfindungsgemäßen Verfahren vor dem Einfüllen des Polymerengranulates in den Extruder in einer derartigen Menge zu dem Granulat aus keine Füllstoffe enthaltenden Polymeren zugemischt, daß der gewünschte Gewichtsprozentanteil an Füllstoffen in der Folie realisiert wird. Bevorzugt wird das Masterbatch zu einer Mischung aus keine Füllstoffe enthaltendem Granulat und Regranulat zugesetzt. Unter Regranulat soll im Rahmen der vorliegenden Erfindung ein Granulat verstanden werden, das aus während der Folienherstellung anfallendem Abfall- und Verschnittmaterial (Regenerat) durch Wiederaufarbeitung hergestellt wird.

Die nach dem erfindungsgemäßen Verfahren hergestellten Folien können einschichtigen Aufbau haben, oder es können mehrschichtige Laminate sein umfassend eine Basisfolie mit ein- oder beidseitig aufgebrachten funktionellen weiteren Schichten. Zur Erzeugung des opaken Aussehens der nach dem erfindungsgemäßen Verfahren hergestellten Folien wird die durch Abschrecken der Kunststoffschmelze hergestellte Vorfolie nacheinander in Längsrichtung bei einer Temperatur von 120 bis 130°C um das Fünf- bis Siebenfache und in Querrichtung bei einer Temperatur von 160 bis 170°C um das Acht- bis Zehnfache streckorientiert. Bei einer Füllstoffmenge im Bereich von 10 bis 40 Gew.-%, bezogen auf das Gesamtgewicht aus Polypropylen und Füllstoffen, besitzt die einschichtige mit Füllstoffen versehene Folie, bzw. die mit Füllstoffen versehene, das opake Aussehen bewirkende Schicht der Mehrschichtfolie, typischerweise eine Dichte von maximal 0,6g/cm³, bevorzugt von 0,4 bis 0,6g/cm³. Die Dicke der so hergestellten Folien beträgt üblicherweise 10 bis 80 µm, bevorzugt 20 bis 60 µm. An die Verfahrensschritte der Streckorientierung schließt sich der Verfahrensschritt der Thermofixierung, der Wärmenachbehandlung der Folie zum Zweck der Dimensionsstabilisierung, an. Die Thermofixierung wird vorzugsweise bei einer Temperatur im Bereich von 150 bis 160°C mit einer Zeitdauer von 0,5 bis 10 Sekunden (s) vorgenommen.

Bei den funktionellen Schichten im Falle einer Mehrschichtfolie handelt es sich in der Regel um heiß- oder kaltsiegelfähige Schichten. Es kann sich auch um nicht siegelbare Schichten handeln wie z.B. Haftvermittlerschichten, Farbstoffüberzüge, insbesondere Bedruckungen, oder Metallüberzüge. Alle diese Schichten können ein- oder beidseitig vorliegen.

Als Heißsiegelschichten werden vorzugsweise Schichten aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.-% (bezogen auf das Copolymerisat), einem Terpolymerisat aus Propylen, Ethylen und einem $\alpha$-Olefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines $\alpha$-Olefins mit 4 bis 10 Kohlenstoffatomen, oder aus einer Mischung dieser Polymeren eingesetzt. Die Comonomeren sind in den Polymerisaten im wesentlichen statistisch verteilt (vgl. deutsche Auslegeschrift 28 14 311). Geeignete Kaltsiegelschichten bestehen aus Polymerisaten auf der Basis von natürlichem oder synthetischem Kautschuk. Die nicht siegelbare Deckschicht besteht vorzugsweise aus einem entsprechenden Propylen-Homopolymerisat.

Die Dicke der Heißsiegelschicht beträgt etwa 0,1 bis 10 µm, vorzugsweise 0,5 bis 2 µm. Die Kaltsiegelschicht und die nicht siegelbaren Schichten weisen in der Regel ebenfalls eine solche Dicke auf. Im Falle der mehrschichtigen Folie mit ein- oder beidseitig aufgebrachten Heißsiegelschichten wird die mehrschichtige Folie bevorzugt nach dem Coextrusionsverfahren hergestellt.

Durch die Zugabe des Masterbatches zum Homopolymeren entsteht eine Mischung, die im Vergleich mit der Mischung nach dem Stand der Technik eine wesentlich erhöhte Schüttgutdichte aufweist. Hat die Mischung nach dem Stand der Technik eine Schüttgutdichte von ca. 570 kg/m³, so weist die vergleichbare erfindungsgemäße Schüttung, hergestellt unter Verwendung eines Masterbatches mit einem Füllstoffanteil von 50 Gew.-%, eine Schüttgutdichte von ca. 730 bis 750 kg/m³ auf. In bevorzugter Ausführungsform hat die Granulatmischung eine Schüttgutdichte von größer als 570, insbesondere von 600 bis 800 kg/m³. Hauptsächlich wird die erhöhte Schüttgutdichte durch die schweren, jedoch sehr kleinen Körner mit dem hohen Füllstoffgehalt erzielt.

Überraschenderweise wurden durch Einsatz des beschriebenen Masterbatches zwei weitere sehr positive Effektive erzielt, die zu einer wesentlichen Verbesserung der Wirtschaftlichkeit und der Folienqualität der damit hergestellten Folien führen.

Es wurde mit dem Einsatz des Masterbatches eine Erhöhung des Extruderausstoßes erzielt, und zwar etwa um das Maß der Dichteerhöhung. Als Erklärung hierfür werden derzeit folgende Überlegungen herangezogen:

Nach Messungen an förderwirksam genuteten Einzugszonen (siehe Kunststoffe 72 (1982) 5, 262-266) ist der für eine vorgegebene Geometrie aus Schneckendurchmesser D und Drehzahl n zu berechnende Massedurchsatz $\rho_s$ alleine noch von der Schüttgutdichte $\rho_s$ abhängig:

$$\dot{m} = K \cdot \rho_s \cdot n \cdot D^3 \quad (1)$$

K bedeutet in der Formel eine Konstante, in die unter anderem die Reibwerte des Polymeren am Zylinder und an der Schnecke eingehen. Nimmt man an, daß durch die Zugabe des Masterbatches das Verhältnis der Reibwerte des Polymeren an Schnecke und Zylinder zueinander nahezu konstant bleibt, so ergibt sich der beim Einsatz des Masterbatches resultierende Massedurchsatz $\dot{m}^{MB}$ sofort aus

$$\dot{m}^{MB} = \frac{\rho_s^{MB}}{\rho_s} \cdot \dot{m} \quad (2)$$

$\rho_s^{MB}$ = Schüttgutdichte mit Masterbatch
$\rho_s$ = Schüttgutdichte ohne Masterbatch

Beträgt beispielsweise $\dot{m}$ etwa 1000 kg/h, so ist mit den Zahlenwerten für $\rho_s$ und $\rho_s^{MB}$ der Durchsatz bei Einsatz von Masterbatch

$$\dot{m}^{MB} = \frac{730}{570} \cdot 1000 = 1280 \text{ kg/h.}$$

Der zweite positive Effekt ist in einer drastischen Verminderung der Druckschwankungen am Ausgang des Extruders zu sehen. Wurden bisher dort Schwankungswerte von 3 bis 4 bar gemessen, so betragen sie bei dem erfindungsgemäßen Verfahren nur noch maximal 1 bar. Durch den Einsatz des Masterbatches gemäß der Erfindung lassen sich überraschenderweise Folien herstellen mit in Maschinenrichtung gleichmäßigeren Folieneigenschaften, vor allem mit einer besseren Dickengleichmäßigkeit, die eine höhere Prozeßsicherheit und eine bessere Weiterverarbeitbarkeit der Folie bedeutet.

Nach derzeitigen Erkenntnissen lassen sich zwei Erklärungen dafür angeben, daß es nach dem erfindungsgemäßen Verfahren möglich ist, blasenfreie opake Folien mit niedriger Dichte vorteilhaft herzustellen. Zum einen bewirkt die Erhöhung der Schüttgutdichte eine bessere Abstimmung der Schüttguteigenschaften auf den Schneckenkanal, insbesondere jedoch auf die Zylinderwand, die üblicherweise förderwirksam genutet ist. Durch die starke Erhöhung der Schüttgutdichte ist - wie bereits erörtert - weniger Luft im System enthalten als bei einer vergleichbaren Schüttung mit niedriger Schüttgutdichte. Die vorgegebene Kompression der Extruderschnecke und das Verhältnis aus Feststoffdichte und Schüttgutdichte ist dadurch weitaus besser abgewogen als im Falle einer vergleichsweise leichten Packung.

Die in der Granulatschüttung enthaltene Luft kann in einem Extruder nur dann vollständig in Richtung zum Einfülltrichter zurück entweichen, wenn sichergestellt ist, daß der Aufschmelzvorgang des Polymerengranulats auf jeden Fall vor Erreichen der Zone des höchsten Druckes im Extruderzylinder (Ende der Kompressionszone) vollständig abgeschlossen ist. Die Länge der Aufschmelzzone bleibt in etwa konstant, wenn die Verweilzeit des Granulats ebenfalls konstant bleibt. Dies soll im folgenden anhand eines Rechenbeispiels überprüft werden.

Die Verweilzeit $\tau$ in der Aufschmelzzone beträgt:

$$\tau = \frac{V \cdot \rho_s}{\dot{m}} \tag{3}$$

V=Schneckenkanalvolumen.

Wenn man Gleichung (1) anwendet, ergibt sich:

$$\tau = \frac{V}{K \cdot n \cdot D^3} \tag{4}$$

Hieraus wird ersichtlich, daß die Verweilzeit $\tau$ des Polymeren in der Aufschmelzzone nur von der Extrudergeometrie abhängt (Schneckenvolumen V, Schneckendrehzahl n und Schneckendurchmesser D), dagegen von der Schüttgutdichtes $\rho_s$ unabhängig ist. Deshalb lassen sich durch die Erhöhung der Schüttgutdichte Folien ohne Qualitätseinbußen (Bläschenbildung) bei gleichzeitig erhöhtem Massedurchsatz herstellen.

Der zweite Grund liegt in der besseren Abstimmung der Schüttgutpackung auf die Zylindernutung. Durch die kleinen schweren Granulatkörner ist die Verhakung der Schüttung in der Nutung weitaus statistischer als im Falle niedriger Packungsdichte. Der Druckaufbau im Granulatbett ist ungestörter, so daß die Luft sehr schnell in Richtung zum Trichter hin abgequetscht werden kann.

In der nachfolgend angegebenen Tabelle 1 soll beispielhaft nochmals an sechs Proben gezeigt werden, in welchen Fällen es bei der Folienherstellung zu einer Blasenbildung auf der Folienoberfläche kommt (symbolisiert durch +) und wann diese vermieden werden kann (symbolisiert durch -). Das jeweils eingesetzte Masterbatch bestand zu 50 Gew.-% aus Polypropylen und zu 50 Gew.-% aus Füllstoff, wobei als Füllstoff jeweils Kalziumcarbonat verwendet wurde.

Tabelle 1

| Mischung | Normform | Blasen |
|---|---|---|
| PP + 10% Pigment | Zylindergranulat | + |
| PP + 10% Pigment | Linsengranulat | + − |
| PP + 20% Pigment | Linsengranulat | + + |
| PP + 10% Pigment + 10% über Masterbatch jedoch | Zylinder/Linsen | + |
| PP + 10% Pigment über Masterbatch | Zylinder/Linsen | − − |
| PP + 20% Pigment über Masterbatch | Zylinder/Linsen | − − |

**Patentansprüche**

1. Verfahren zur Herstellung einer biaxial streckorientierten Folie mit wenigstens einer opaken Schicht, bestehend im wesentlichen aus Polypropylen und Füllstoffen in einer Menge von 10 bis 40 Gew.-%, bezogen auf das Gesamtgewicht von Polypropylen und Füllstoffen, bei dem Granulat in einem Schneckenextruder aufgeschmolzen, durch eine Düse gepreßt und durch Abkühlen zu einer Vorfolie ausgeformt wird, welche dann sowohl in Maschinenrichtung längs als auch senkrecht zur Maschinenrichtung quer streckorientiert und anschließend thermofixiert wird, dadurch gekennzeichnet, daß die Zugabe der Füllstoffe zu Granulat aus keine Füllstoffe enthaltenden Polymeren in Form eines Masterbatches vorgenommen wird und daß das Masterbatch einen Füllstoffanteil von mehr als 30 Gew.-%, bezogen auf das Gesamtgewicht des Masterbatches, aufweist.

2. Verfahren nach Anspruch 1, dadurch gekennzeichnet, daß das Masterbatch einen Füllstoffanteil von mehr als 40 Gew.-%, bezogen auf das Gesamtgewicht des Masterbatches, aufweist.

3. Verfahren nach Anspruch 1 oder 2, dadurch gekennzeichnet, daß das Masterbatch als zylinderförmiges Granulat mit einem mittleren Zylinderdurchmesser von 1 bis 2 mm und einer Zylinderlänge von 0,5 bis 1,5 mm vorliegt.

4. Verfahren nach Anspruch 1 oder 2, dadurch gekennzeichnet, daß das Masterbatch als linsenförmiges Granulat mit einem mittleren Durchmesser von 1 bis 3 mm und einer mittleren Dicke von 0,5 bis 1 mm vorliegt.

5. Verfahren nach einem der Ansprüche 1 bis 4, dadurch gekennzeichnet, daß das Masterbatch zu einer Mischung aus Regranulat und keine Füllstoffe enthaltendem Granulat zugesetzt wird.

6. Verfahren nach einem der Ansprüche 1 bis 5, dadurch gekennzeichnet, daß das zum Aufschmelzen im Schneckenextruder vorgesehene Granulat eine Schüttgutdichte von 600 bis 800 kg/m³ aufweist.

7. Verfahren nach einem der Ansprüche 1 bis 6, dadurch gekennzeichnet, daß eine einschichtige opake Folie mit einem Gesamtanteil an Füllstoff im Bereich von 10 bis 40 Gew.-%, bezogen auf das Gesamtgewicht von Polypropylen und Füllstoffen, und einer Dichte von maximal 0,6 g/cm³ hergestellt wird.

8. Verfahren nach einem der Ansprüche 1 bis 6, dadurch gekennzeichnet, daß eine mehrschichtige Folie hergestellt wird, umfassend eine opake Schicht aus Polypropylen mit einem Gesamtanteil an Füllstoff im Bereich von 10 bis 40 Gew.-%, bezogen auf das Gesamtgewicht der opaken Schicht, und einer Dichte von maximal 0,6 g/cm³, die ein- oder beidseitig aufgebrachte weitere funktionelle Schichten trägt.

**Claims**

1. A process for the preparation of a biaxially stretch oriented film having at least one opaque layer, composed essentially of polypropylene and fillers in a quantity of 10 to 40% by weight relative to the total weight of polypropylene and fillers, in which process granules are melted in a screw extruder, are forced through a die and are formed by cooling to give a preformed film which is then stretch-oriented both along the machine direction and transversely perpendicular to the machine direction and is then heatset, which comprises adding the fillers in the form of a masterbatch to the granules of unfilled polymers, the masterbatch comprising a filler proportion of more than 30% by weight, relative to the total weight of the masterbatch.

2. The process as claimed in claim 1, wherein the masterbatch comprises a filler proportion of more than 40% by weight, relative to the total weight of the masterbatch.

3. The process as claimed in claim 1 or 2, wherein the masterbatch is in the form of cylindrical granules having a mean cylinder diameter of 1 to 2 mm and a cylinder length of 0.5 to 1.5 mm.

4. The process as claimed in claim 1 or 2, wherein the masterbatch is in the form of lenticular granules having a mean diameter of 1 to 3 mm and a mean thickness of 0.5 to 1 mm.

5. The process as claimed in any of claims 1 to 4, wherein the masterbatch is added to a mixture of regranulated material and unfilled granules.

6. The process as claimed in any of claims 1 to 5, wherein the granules intended for melting in the screw extruder have a bulk density from 600 to 800 kg/m³.

7. The process as claimed in any of claims 1 to 6, wherein a single-ply opaque film having a total filler content in the range from 10 to 40% by weight, relative to the total weight of polypropylene and fillers, and having a maximum density of 0.6 g/cm³ is produced.

8. The process as claimed in any of claims 1 to 6, wherein a multi-ply film is produced which comprises an opaque ply of polypropylene having a total filler content in the range from 10 to 40% by weight, relative to the total weight of the opaque ply, and having a maximum density of 0.6 g/cm³, and which carries further functional layers applied to one side or to both sides.

**Revendications**

1. Procédé de fabrication d'une feuille orientée par étirage biaxial et pourvue d'au moins une couche opaque, constituée essentiellement de polypropylène et de charges en une proportion de 10 à 40% en poids par rapport au poids total du polypropylène et des charges, procédé selon lequel on fait fondre le granulé dans une extrudeuse à vis hélicoïdale, on le presse à travers une filière, le transforme par refroidissement en une ébauche de feuille que l'on oriente ensuite par étirage aussi bien longitudinalement par rapport à l'axe de la machine que transversalement dans une direction perpendiculaire à cet axe, et que on le soumet finalement à un thermofixage caractérisé en ce qu'l'on introduit les charges dans le granulé, formé de polymères ne renfermant pas de charges, sous forme d'un mélange maître, et que ledit mélange maître contient une partie charges représentant plus de 30% en poids du poids total du mélange maître.

2. Procédé selon la revendication 1, caractérisé en ce que le mélange maître comporte une proportion de charges supérieure à 40% en poids, par rapport au poids total du mélange maître.

3. Procédé selon la revendication 1 ou 2, caractérisé en ce que le mélange maître se présente sous forme de granulé cylindrique ayant un diamètre moyen de cylindres de l'ordre de 1 à 2 mm et une longueur de cylindres de l'ordre de 0,5 à 1,5 mm.

4. Procédé selon la revendication 1 ou 2, caractérisé en ce que le mélange maître se présente sous forme de granulé lenticulaire ayant un diamètre moyen de l'ordre de 1 à 3 mm et une épaisseur moyenne de l'ordre de 0,5 à 1 mm.

5. Procédé selon l'une des revendications 1 à 4, caractérisé en ce que le mélange maître est ajouté à un mélange de granulé recyclé et de granulé ne contenant pas de charges.

6. Procédé selon l'une des revendications 1 à 5, caractérisé en ce que le granulé prévu pour la fusion dans l'extrudeuse à vis hélicoïdale possède une densité apparente de 600 à 800 kg/m³.

7. Procédé selon l'une des revendications 1 à 6, caractérisé en ce que l'on fabrique une feuille opaque monocouche ayant une proportion totale de charges de l'ordre de 10 à 40% en poids, par rapport au poids total de polypropylène et de charges, et une densité maximale de 0,6 g/cm³.

8. Procédé selon l'une des revendications 1 à 6, caractérisé en ce que l'on fabrique une feuille multicouche comportant une couche opaque de polypropylène ayant une proportion totale de charges de l'ordre de 10 à 40% en poids, par rapport au poids total de la couche opaque, et ayant une densité maximale de 0,6 g/cm³, ladite feuille étant recouverte sur une ou deux faces par d'autres couches fonctionnelles.